# EUROPÄISCHE PATENTSCHRIFT

(11) **EP 2 078 803 B1**
(45) Veröffentlichungstag und Bekanntmachung des Hinweises auf die Patenterteilung: **17.07.2013**
(21) Anmeldenummer: 09150279.9
(22) Anmeldetag: 09.01.2009
(51) Int. Cl.: E04F 15/02, F16B 5/00, B27G 19/10, B27F 1/02, B27M 3/04, E04F 13/08

(54) **Paneel für einen Boden-, Wand-, und/oder Deckenbelag sowie Verfahren zu dessen Herstellung**
Wall, floor and/or ceiling lining panel and method for their production
Panneau pour un revêtement de sol, de mur et/ou de plafond et son procédé de fabrication

(30) Priorität: 11.01.2008 DE 102008004108
(43) Veröffentlichungstag der Anmeldung: 15.07.2009
(60) Teilanmeldung: 12182929.5
(73) Patentinhaber: Fritz Egger GmbH & Co. OG, 3105 Unterradlberg (AT)
(72) Erfinder: Frehse, Jens, 19057 Schwerin (DE)
(74) Vertreter: Cohausz & Florack

(56) Entgegenhaltungen:
- WO-A1-97/47834
- WO-A1-98/58142
- WO-A1-03/078761
- WO-A2-2007/141605
- CH-A5- 562 377
- DE-U1- 20 116 236
- US-A- 1 982 476

## Beschreibung

Die Erfindung betrifft ein Paneel für einen Boden-, Wand - und/oder Deckenbelag, mit wenigstens vier Außenkanten, wobei wenigstens zwei benachbarte Außenkanten jeweils ein Nutprofil und/oder ein Federprofil aufweisen, wobei das Nutprofil und/oder das Federprofil einstückig aus der Trägerplatte des Paneels herausgefräst ist, wobei angrenzend zu wenigstens einem Rand einer Außenkante eine Ausnehmung aus dem Paneel herausgefräst ist und wobei die Kontur der Ausnehmung wenigstens abschnittsweise derart weiter in das Paneel hineinreicht als die Kontur des Nutprofils und/oder des Federprofils der einen Außenkante, dass in dem Abschnitt der Ausnehmung mehr Material entfernt worden ist, als dies beim Herausfräsen des eigentlichen Nutprofils und/oder Federprofils der Fall ist. Zudem betrifft die Erfindung ein Verfahren zur Herstellung eines Paneels für einen Boden-, Wand - und/oder Deckenbelag, bei dem an wenigstens vier Außenkanten des Paneels jeweils ein Nutprofil oder ein Federprofil einstückig aus der Trägerplatte des Paneels herausgefräst wird.

Paneele der genannten Art weisen in der Regel eine Trägerplatte auf, die aus einem Holzwerkstoff gefertigt ist. Als Holzwerkstoff werden dabei insbesondere mitteldichte oder hochdichte Faserplatten (MDF, HDF) verwendet. Auf diesen Trägerplatten ist eine dekorative Schicht in Form einer Laminatschicht oder einer Lackierung aufgebracht, welche im verlegten, d.h. im zum Boden-, Wand- oder Deckenbelag zusammengefügten Zustand die Nutschicht bildet, die an der Sichtseite vorgesehen ist. Man spricht in diesem Zusammenhang von Laminatpaneelen. Es kann auch auf die dekorative Schicht verzichtet werden. Dann wird das Paneel meist aus massivem Holz hergestellt und man spricht von Parkettpaneelen.

Ein Paneel und ein Verfahren der eingangs genannten Art sind auch in der US 1,982,476 A beschrieben.

Um aus einer Mehrzahl von identischen Paneelen einen flächigen Belag herstellen zu können, werden die Paneele an ihren Kanten mit Nut/Feder-Profilen versehen. Bei modernen Paneelen können diese Nut/Feder-Profile ineinander verriegelt bzw. miteinander verrastet werden.

Die WO 98/58142 zeigt ein sogenanntes Schnapp- oder snap-Profil einer Nut mit zwei im Wesentlich gleich langen, die Nutflanken bildenden Schenkeln oder Lippen. Einer der Schenkel weist eine Vertiefung auf, in die ein korrespondierender Rastvorsprung eines komplementären Federprofils eingreifen kann. Derartige Paneele werden beim Verlegen ineinander geschoben oder ineinander geschlagen.

Heutzutage werden Paneele überwiegend mit so genannten Einwinkel- oder angle-Profilen an den umlaufenden Außenkanten verwendet. Ein solches Paneel, bei dem die Nut von einer oberen und einer unteren Lippe eingefasst ist, wird in der CH 562 377 beschrieben. Dabei ist die untere Lippe länger als die obere Lippe. In der unteren Lippe ist ebenfalls eine Vertiefung vorgesehen, in die ein korrespondierend ausgebildeter Vorsprung des Federprofils eingreifen kann, um so eine formschlüssige Verbindung zu schaffen. Solche Paneele werden miteinander zu einem Belag verbunden, indem das Federprofil eines Paneels in das Nutprofil eines weiteren Paneels eingeschoben wird, wobei das Paneel in Bezug auf das weitere Paneel abgewinkelt wird. Anschließend wird das Paneel in die Paneelebene des weiteren Paneels herunter geschwenkt, wodurch die Paneele miteinander verrasten.

Die Herstellung entsprechender Paneele ist aus der WO 97/47834 bekannt. Dabei werden die Paneele zunächst aus großformatigen, beschichteten Platten herausgesägt. Anschließend werden die Paneele an ersten Fräseinrichtungen vorbeigeführt, welche aus den Längskanten ein Nutprofil und ein Federprofil herausfräsen. Anschließend werden die Paneele seitwärts an zweiten Fräseinrichtungen vorbeigeführt, die an den Querkanten je ein weiteres Nutprofil und Federprofil herausfräsen. Für unterschiedliche Konturbereiche der Profile werden unterschiedliche Fräswerkzeuge eingesetzt, die in Vorschubrichtung des Paneels hintereinander angeordnet sind. Die so hergestellten Paneele weisen an einer kurzen und einer benachbarten langen Kante ein Nutprofil auf. Dieses Nutprofil umfasst eine untere Lippe, die gegenüber einer oberen Lippe nach außen vorsteht. An den beiden anderen, ebenfalls benachbarten Kanten weisen die Paneele jeweils ein Federprofil auf. Bei der spanenden Bearbeitung der Kanten der Paneele mit den unterschiedlichen Fräswerkzeugen treten an bestimmten Teilen bzw. Flanken der Profile Belastungsspitzen auf, die insbesondere durch Kraftkomponenten senkrecht zur Paneelebene gekennzeichnet sind. Diese Belastungsspitzen führen bei heute möglichen Vorschubgeschwindigkeiten von etwa 250 bis 350 m/min zu Spannungen im Material, die zu Beschädigungen des Paneels führen können. Hohe Spannungen entstehen hauptsächlich beim Ausformen dünnwandiger Profilelemente wie der vorgezogenen unteren Lippe eines Nutprofils oder des Federelements eines korrespondierenden Federprofils, wobei diese Belastungen mit abnehmender Plattenstärke überproportional zunehmen.

Eine Folge zu hoher Spannungen sind Risse, welche beispielsweise in der Paneelebene liegen. Bei der Verwendung derart beschädigter Paneele können sich mit der Zeit die Ecken der Paneele aufbiegen, was unansehnlich ist und zu einem frühzeitigen Verschleiß führt.

Der Erfindung liegt daher das technische Problem zugrunde, ein Paneel mit einem dünnwandigen Profilelement, das an seinen Ecken weniger zum Aufbiegen neigt und eine höhere Lebensdauer aufweist, sowie ein Verfahren zu dessen Herstellung anzugeben.

Das genannte technische Problem wird bei einem Paneel mit dem Oberbegriff des Anspruchs 1 erfindungsgemäß dadurch gelöst, dass die Kontur der Ausnehmung wenigstens abschnittsweise derart weiter in das Paneel hineinreicht als die Kontur des Nutprofils und/oder des Federprofils der einen Außenkante, dass die Kontur der Nut und/oder der Feder wenigstens abschnittsweise innerhalb der Kontur der Ausnehmung verläuft, wenn die Konturen längs zur einen Außenkante aufeinander projiziert werden.

Das genannte technische Problem wird zudem durch ein Verfahren der eingangs genannten Art gelöst,
- bei dem vor dem Herausfräsen des Profils an der einen Außenkante angrenzend zu wenigstens einem Rand der einen Außenkante eine Ausnehmung aus dem Paneel herausgefräst wird und
- bei dem die Ausnehmung derart mit einer Kontur herausgefräst wird, die wenigstens abschnittsweise weiter in das Paneel hineinreicht als die Kontur des Nutprofils und/oder des Federprofils der einen Außenkante, dass in dem Abschnitt der Ausnehmung mehr Material entfernt wird, als dies beim Herausfräsen des eigentlichen Nutprofils und/oder Federprofils der Fall ist und dass die Kontur der Nut und/oder der Feder wenigstens abschnittsweise innerhalb der Kontur der Ausnehmung verläuft, wenn die Konturen längs zur einen Außenkante aufeinander projiziert werden

Die Erfindung hat erkannt, dass die Profilierung einzelner Außenkanten eines Paneels durch Herausfräsen von Nut/Feder-Profilen an den Rändern der benachbarten Außenkanten zu Schwächungen führt, da dort weniger Material zur Aufnahme von bei der Bearbeitung eingeleiteten Kräften zur Verfügung steht. Bei der Bearbeitung dieser geschwächten Randbereiche sind die Spannungen im Material soweit zu vermindern, dass Risse oder ähnliche Beschädigungen sicher vermieden werden können.

Diesem wird erfindungsgemäß dadurch entgegen getreten, dass am Rand einer Außenkante, d.h. benachbart zu dessen einem Ende, eine Ausnehmung herausgefräst wird, und zwar bevor die entsprechende Außenkante profiliert worden ist. Es wird also erst die Ausnehmung und dann das entsprechende Profil an der einen Außenkante herausgearbeitet.

Die Ausnehmung ist dabei so ausgebildet, dass wenigstens das Fräswerkzeug, das bei der Bearbeitung der einen Außenkante die größten bzw. problematischsten Spannungen erzeugt, im Bereich der Ausnehmung eine geringere Anlagefläche an die eine Außenkante hat. Im Ergebnis drückt das Fräswerkzeug dann in der Ausnehmung weniger stark gegen das Paneel. Dies kann alternativ oder zusätzlich auch dadurch erreicht werden, dass infolge der Ausnehmung von einem bestimmten nachfolgenden Fräswerkzeug weniger Material herausgefräst werden muss, wodurch ebenfalls geringere Belastungen auf das Paneel ausgeübt werden.

Vorzugsweise kann die Ausnehmung so ausgebildet sein, dass das in Rede stehende Fräswerkzeug in der Ausnehmung jedenfalls bereichsweise überhaupt nicht mit dem Paneel in Kontakt kommt. Die Ausnehmung bildet also einen Einlaufbereich für wenigstens ein Fräswerkzeug im geschwächten Bereich. Erst danach, also in einem Abschnitt in dem höhere Kräfte problemlos aufgenommen werden können, wird die volle Fräswirkung des Fräswerkzeugs erreicht.

Die wenigstens eine Ausnehmung unterscheidet sich vom Rest der einen Außenkante, d.h. dem entsprechenden dort vorgesehenen Nut- oder Federprofil dadurch, dass an wenigstens einer Stelle der Ausnehmung mehr Material entfernt wird, als dies beim Herausarbeiten des eigentlichen Profils der einen Außenkante der Fall ist. So kann die Ausnehmung aus dem Paneel herausgearbeitet werden, ohne dass hohe Spannungen auftreten. Die Wahl der Geometrie des Fräswerkzeugs zum Herausarbeiten der Ausnehmung ist also nicht strikt durch die Profilgeometrie limitiert, wie dies bei den Fräswerkzeugen zum Herausarbeiten des Nut- und/oder Federprofils der Fall ist. Es können also einfachere Fräswerkzeuge verwendet werden, deren Konturierung geringere Belastungsspitzen in das Material einleitet. Es können so Fräswerkzeuge zum Herausarbeiten der Ausnehmung verwendet werden, welche beispielsweise die Lippen des Nutprofils oder des Federelements des Federprofils weniger stark nach außen drücken. Die Kräfte solcher Fräswerkzeuge wirken vorwiegend parallel zur Paneelebene, da in dieser Richtung vom Paneel größere Kräfte beschädigungsfrei aufgenommen werden können. Beispielsweise werden zum Herausfräsen der Ausnehmung Fräswerkzeuge verwendet, die parallel zur Paneelebene des zu bearbeitenden Paneels ausgerichtet sind. Anders gesagt ist der Schneidenflugkreis der entsprechenden Fräswerkzeuge im Wesentlichen parallel zur Paneelebene ausgerichtet. Kann dies nicht realisiert werden ist der Winkel zwischen dem Schneidenflugkreis und der Paneelebene kleiner 30°, vorzugsweise kleiner 15°. Besonders gute Ergebnisse werden für Winkel bis maximal 3° erhalten.

Im Ergebnis reicht die Kontur der wenigstens einen Ausnehmung folglich wenigstens abschnittsweise weiter in das Material des Paneels hinein als das bei der Kontur des entsprechenden Profils der einen Außenkante außerhalb der Ausnehmung der Fall ist. Im entsprechenden Abschnitt ist also in der Ausnehmung verglichen mit dem entsprechenden Profil mehr Material des Paneels entfernt worden. Werden die Konturen der wenigstens einen Ausnehmung und des Nutprofils bzw. Federprofils der einen Außenkante aufeinander projiziert, so verläuft die Kontur der Ausnehmung wenigstens abschnittsweise dort, wo beim entsprechenden Profil noch Material des Paneels vorhanden ist.

Damit ergibt sich auch, dass vorliegend unter dem wenigstens einen Rand der einen Außenkante der Rand in einer Richtung parallel zur einen Außenkante gemeint ist, wo die eine Außenkante mit einer benachbarten Außenkante des Paneels zusammentrifft. Dieser wenigstens eine Rand kann durch den äußersten Punkt der einen Außenkante oder durch das Ende des Nutzschicht an der Sichtseite des Paneels in der Richtung parallel zur einen Außenkante bestimmt werden.

Die Profilierung an den Außenkanten des Paneels kann derart erfolgen, dass eine Außenkante jeweils entweder ein Nutprofil oder ein Federprofil aufweist. Es kann aber auch vorgesehen sein, das an einer Außenkante oder den Außenkanten sowohl ein Nutprofilabschnitt als auch ein Federprofilabschnitt vorgesehen ist. Man spricht in diesem Zusammenhang auch von so genannten DoppelNut/Feder-Profilen. Es kommt bei derartigen Paneelen dann insbesondere auf das randnahe Profil der einen Außenkante also das sich der Ausnehmung anschließende Profil an, denn Beschädigungen oder andere Beeinträchtigungen sollen insbesondere im Randbereich vermieden werden.

Das Paneel als solches besteht vorzugsweise aus einem Holzwerkstoff, da die Ausnehmung für solche Paneele besonders wirkungsvoll ist. Unter einem Holzwerkstoff werden etwa mitteldichte oder hochdichte Faserplatten (MDF- oder HDF-Platten) verstanden, die kostengünstig und robust sind. Dementsprechend können das Nutprofil und/oder das Federprofil aus einem Holzwerkstoff, vorzugsweise aus einer mitteldicken Faserplatte (MDF-Platte) oder einer hochdichten Faserplatte (HDF-Platte), herausgefräst sein bzw. werden.

Reine Holzwerkstoffe weisen lediglich geringe Anteile an Bindemitteln oder dergleichen auf. Es kann sich aber auch um einen Holz-Kunststoff-Verbundwerkstoff handeln, der beispielsweise größere Kunststoffanteile aufweist, die wiederum thermoplastisch oder duroplastisch sein können.

Die erfindungsgemäße Lehre ist besonders wirkungsvoll für Paneele deren korrespondierende Nut- und Federprofile durch Aneinanderführen und anschließendes Verschwenken der Paneele verbunden werden. Dementsprechend kann vorgesehen sein, dass das Nutprofil und das Federprofil, vorzugsweise durch Verschwenken, miteinander verriegelbar sind. Beim Verschwenken wird ein neu hinzu kommendes Paneel aus einer abgewinkelten Position in die Ebene des bereits verlegten Paneels verschwenkt. Derartige Nut- bzw. Federprofile sind wegen ihrer komplexeren Profilgeometrie besonders anfällig für Beschädigungen beim Fräsen der Profile.

Um Beschädigungen des Paneels an einer äußeren Ecke des Profils zu vermeiden, kann alternativ oder zusätzlich vorgesehen sein, dass sich die Ausnehmung in einer Richtung parallel zur Paneelebene bis unter eine Nutzschicht oder Dekorschicht des Paneels erstreckt.

Vorzugsweise handelt es sich bei der einen Außenkante um eine kürzere Querkante des Paneels, die benachbart zu einer längeren Längskante des Paneels angeordnet ist. Die Randbereiche kürzerer Querkanten sind besonders in Bezug auf Risse oder andere Beschädigungen gefährdet. Dies gilt umso mehr, wenn an der längeren Längskante vor dem Profilieren der Querkante bereits ein identisches Nut- oder Federprofil herausgearbeitet worden ist.

Nach einer Lehre der Erfindung handelt es sich bei der einen Außenkante um eine Nutprofilaußenkante mit einem Nutprofil außerhalb der wenigstens einen Ausnehmung, bei der es sich dementsprechend um wenigstens eine Nutprofilausnehmung handelt. Nutprofile weisen Nutflanken bildende Lippen auf, die mehr oder weniger weit vorstehen können. An entsprechenden Lippen treten beim Herausfräsen der Profilgeometrie sehr leicht Beschädigungen auf.

Im Falle einer Nutprofilaußenkante ist die wenigstens eine Nutprofilausnehmung vorzugsweise angrenzend zu einer ebenfalls ein Nutprofil aufweisenden weiteren Außenkante vorgesehen. Dort wo an benachbarten Außenkanten Nutprofile aufeinander stoßen ist das Paneel besonders geschwächt, insbesondere wenn die unteren Lippen der Nutprofile sehr dünn sind und weit nach außen vorstehen. Die Ausnehmung ist dann besonders wirkungsvoll.

Weist wenigstens eine der Lippen des Nutprofils der einen Außenkante einen Vorsprung auf, der senkrecht zur Paneelebene von der Lippe vorsteht, so bietet es sich an, wenn die Kontur der wenigstens einen Nutprofilausnehmung im Bereich des Vorsprungs der Lippe der Nutprofilaußenkante weiter in das Paneel hineinreicht als die Kontur des Nutprofils der Nutprofilaußenkante. Dies bedeutet beispielsweise, dass im Bereich der Ausnehmung die entsprechende Lippe keinen solchen Vorsprung aufweist. Dieser Vorsprung kann geopfert werden, um die Belastungen beim Einbringen der Ausnehmung bzw. der Ausnehmungen zu verringern. Zudem kann diese besonders leicht beschädigt werden. Bei der entsprechenden Lippe handelt es sich vorzugsweise um eine untere Lippe, die einen nach oben abstehenden Vorsprung aufweist und gegebenenfalls länger ist als die obere Lippe. Alternativ oder zusätzlich ist aber auch das Gegenteil möglich.

Vorzugsweise ist dabei die entsprechende Lippe im Bereich der wenigstens einen Nutprofilausnehmung insgesamt dünner ausgeführt als im Bereich des Nutprofils der Nutprofilaußenkante. Beim Herausfräsen der wenigstens einen Nutprofilausnehmung wird also nicht nur in einem bestimmten etwa einen Vorsprung einer Lippe aufweisenden Bereich zusätzliches Material weggenommen. Die Lippe wird insgesamt also im Wesentlichen über die gesamte Erstreckung der Nutprofilausnehmung dünner ausgebildet als die Lippe des Nutprofils der Nutprofilaußenkante. Ein Kontakt zwischen einem nachfolgenden Fräswerkzeug und der Lippe wird so sicher verhindert, wodurch dort keine senkrechten Kraftkomponenten in das Paneel eingeleitet werden.

Nach einer weiteren Lehre der Erfindung handelt es sich bei der einen Außenkante um eine Federprofilaußenkante mit einem entsprechenden Federprofil außerhalb der ebenfalls vorgesehenen wenigstens einen Federprofilausnehmung. Ein entsprechendes Federprofil weist ein dünnes, vorstehendes Federelemente auf, an dem beim Herausfräsen aus dem Paneelrohling leicht Beschädigungen auftreten können. Daher kann das Paneel vorzugsweise auch zwei Ausnehmungen aufweisen, und zwar eine Nutprofilausnehmung und eine Federprofilausnehmung, wobei die Ausnehmungen an einer entsprechenden Federprofilaußenkante und einer entsprechenden Nutprofilaußenkante, die weiter vorzugsweise jeweils kürzere Querkanten des Paneels sind.

Im Falle wenigstens einer Federprofilausnehmung ist diese vorzugsweise angrenzend zu einer weiteren Außenkante vorgesehen, die ebenfalls ein Federprofil aufweist. In entsprechenden Eckbereichen eines Paneels können die Federelemente der benachbarten Außenkante aufeinander treffen, wo es ohne eine entsprechende Federprofilausnehmung leicht zu Brüchen oder Rissen kommen kann.

Bei einer Federprofilaußenkante kann das entsprechende Federelement insbesondere in einem Bereich eines Vorsprungs geschwächt sein. Der Vorsprung weist dabei insbesondere in einer Richtung senkrecht zur Paneelebene weg von der Nutzschicht bzw. Sichtseite des Paneels. Dementsprechend kann die Kontur der wenigstens einen Federprofilausnehmung im Bereich eines nach unten gerichteten Vorsprungs eines Federelements der Federprofilaußenkante weiter in das Paneel hineinreichen als die Kontur des Federprofils der Federprofilaußenkante. Im Bereich der Federprofilausnehmung ist also mit anderen Worten das Material des Vorsprungs mit weggenommen. Folglich kann der entsprechende Vorsprung auch nachträglich nicht mehr beschädigt werden. Gleiches gilt natürlich auch für Vorsprünge des Federelements, die in die Gegenrichtung, also nach oben, oder in eine andere Richtung vorstehen.

Ähnlich wie die beschriebenen Vorsprünge wird auch eine vordere Kante eines Federelements der Federprofilaußenkante beim Herausfräsen aus dem Paneel leicht beschädigt, da das Paneel im entsprechenden Bereich geschwächt ist. Um dies zu vermeiden, kann, die Kontur der wenigstens einen Federprofilausnehmung im Bereich des vorderen Endes eines Federelements des Federprofils der Federprofilaußenkante weiter in das Paneel hineinreichen als die Kontur des Federprofils der Federprofilaußenkante. Vorne ist in diesem Zusammenhang an dem von der Nutzschicht abgewandten, freien Ende des Federelements.

Darüber hinaus kann das Federelement im Bereich der wenigstens einen Federprofilausnehmung aber auch insgesamt dünner ausgeführt sein als im Bereich des Federprofils der Federprofilaußenkante. Das Federelement wird also insgesamt und nicht nur im Bereich eines Vorsprungs des Federelements dünner ausgebildet als das Federelement des Federprofils der Federprofilaußenkante. Ein Kontakt zwischen einem nachfolgenden Fräswerkzeug und dem Paneel kann so sicher verhindert werden.

Durch Fräswerkzeuge, die wenige oder noch besser gar keine schrägen Abschnitte aufweisen, welche mit der Nutprofilaußenkante und/oder der Federprofilaußenkante in Kontakt kommen, werden insbesondere die Kraftkomponenten senkrecht zur Paneelebene verringert. Dementsprechend weist die wenigstens eine Nutprofilausnehmung und/oder Federprofilausnehmung senkrecht zur Paneelebene einen im Wesentlichen rechteckigen Querschnitt auf.

Insbesondere hinsichtlich der Federprofilausnehmung ist ein senkrecht zur Paneelebene gestufter Querschnitt, vorzugsweise mit senkrecht zur Paneelebene jeweils rechteckigen Segmenten, bevorzugt. Dabei erstreckt sich dann beispielsweise die Kontur einerseits am vorderen Ende des Federelements und andererseits an dessen Unterseite weiter in die Federprofilaußenkante hinein als außerhalb der Federprofilausnehmung.

Die wenigstens eine Ausnehmung, die sowohl eine Nutprofilausnehmung als auch eine Federprofilausnehmung sein kann, kann an der einen entsprechenden Außenkante nicht nur an einem, sondern auch an dem gegenüberliegenden Rand der einen Außenkante vorgesehen sein. Dadurch wird für wenigstens ein zum Profilieren der entsprechenden Außenkante erforderliches Fräswerkzeug nicht nur ein Einlaufbereich in das Paneel oder Auslaufbereich aus dem Paneel, sondern sowohl ein Einlaufbereich als auch ein Auslaufbereich geschaffen. Im Ein- und Auslaufbereich kommt das Fräswerkzeug dann weniger mit dem Paneel in Kontakt oder muss nicht so viel Material aus dem Paneel herausarbeiten als ohne die beiden Ausnehmungen. Die beiden Ausnehmungen einer Außenkante unterscheiden sich gegebenenfalls bereits daher, dass benachbart zum einen Rand ein Nutprofil und benachbart zum anderen Rand ein Federprofil vorgesehen sein kann. Daher ist es zwar bevorzugt, dass die beiden Ausnehmungen einer Außenkante jeweils die gleichen, insbesondere zuvor diskutierten, Merkmale aufweisen. Grundsätzlich können sich jedoch Unterschiede zwischen den beiden Ausnehmungen an entgegen gesetzten Rändern der einen Außenkante ergeben.

Verfahrensmäßig werden die Nut/Federprofile bevorzugt aus einem Holzwerkstoff herausgefräst, da bei solchen Materialien die Ausnehmungen besonders wirkungsvoll sind. Unter einem Holzwerkstoff werden etwa mitteldichte oder hochdichte Faserplatten (MDF- oder HDF-Platten) verstanden, die kostengünstig und robust sind. Derartige reine Holzwerkstoffe weisen lediglich geringe Anteile an Bindemitteln oder dergleichen auf. Es kann sich aber auch um einen Holz-Kunststoff-Verbundwerkstoff handeln, der größere Kunststoffanteile aufweist, die wiederum thermoplastisch oder duroplastisch sein können. Es kann auch eine Trägerplatte aus einem entsprechenden Werkstoff vorgesehen sein, an der die Nut/Feder-Profile vorgesehen werden, wobei die Trägerplatte dann vorzugsweise eine äußere dekorative Schicht trägt, bei der es sich um eine Laminatschicht aus einem in Harz getränkten Dekorpapier handeln kann.

Vorzugsweise werden Nutprofile und Federprofile aus dem Paneel herausgefräst, die zum mechanischen Verriegeln miteinander vorgesehen sind. Dabei erfolgt das Verriegeln weiter vorzugsweise durch Verschwenken der beiden miteinander zu verbindenden Paneele, wobei beispielsweise das hinzukommende Paneel aus einer abgewinkelten Position in die Ebene des anderen Paneels geschwenkt wird. Bei derartigen Nut- bzw. Federprofilen kommt es besonders häufig zu Beschädigungen infolge lokaler Schwächungen des Paneels.

Um Beschädigungen beim Herstellen des Paneels zu verhindern, kann alternativ oder zusätzlich die wenigstens eine Ausnehmung in einer Richtung parallel zur Paneelebene bis unter eine Nutzschicht an der Vorderseite der Paneele herausgefräst werden. Es kommt damit im entsprechenden Eckbereich des Paneels zu keinem besonders geschwächten Paneelabschnitt.

Vorzugsweise wird die wenigstens eine Ausnehmung der einen Außenkante an einer kürzeren Querkante des Paneels herausgefräst, und zwar benachbart zu einer längeren Längskante des Paneels. Es hat sich gezeigt, dass an den Randbereichen der kürzeren Querkanten Risse oder andere Beschädigungen besonders leicht entstehen können. Das ist insbesondere der Fall, wenn bereits vor dem Profilieren der kürzeren Querkante die benachbarte längere Längskante bereits profiliert worden ist.

Nach einer Lehre des Verfahrens wird wenigstens eine Nutprofilausnehmung aus einer Nutprofilaußenkante herausgefräst. Dies erfolgt dann bevor an der Nutprofilaußenkante das Nutprofil herausgefräst wird. Das Nutprofil weist Lippen auf, welche auch die Nutflanken definieren und mehr oder weniger vorstehen und daher geschwächt sind. Durch die Nutprofilausnehmung werden dort allerdings Beschädigungen vermieden.

Die Nutprofilausnehmung kann angrenzend zu einer weiteren Außenkante herausgefräst werden, an der zuvor bereits ein weiteres Nutprofil herausgefräst wurde. Alternativ kann auch vorgesehen sein, dass das weitere Nutprofil erst nachträglich an der weiteren Außenkante herausgefräst wird. Jedenfalls die besonders geschwächten Bereiche des Nutprofils an der Nutprofilaußenkante werden so vor Beschädigungen geschützt.

Wenn das herauszuarbeitende Nutprofil einen Vorsprung aufweist, der sich senkrecht zur Paneelebene erstreckt, so kann die wenigstens eine Nutprofilausnehmung mit einer Kontur aus dem Paneel herausgefräst werden, die sich im Bereich des Vorsprungs der Lippe der Nutprofilaußenkante weiter in das Paneel hinein erstreckt als die Kontur des Nutprofils der Nutprofilaußenkante. Vorzugsweise handelt es sich bei der Lippe um eine untere längere Lippe des Nutprofils mit einem Vorsprung, der senkrecht nach oben weist. Mit anderen Worten wird im Bereich der Ausnehmung auch das Material herausgefräst, welches beim Nutprofil den Vorsprung bildet. Der nicht vorhandene Vorsprung im Bereich der Ausnehmung kann durch einen nachträglichen Arbeitsschritt nicht beschädigt werden.

Vorzugsweise wird dabei die Lippe im Bereich der wenigstens einen Nutprofilausnehmung insgesamt dünner aus der Nutprofilaußenkante herausgefräst als im Bereich des Nutprofils der Nutprofilaußenkante. Anschließend eingesetzte Fräswerkzeuge kommen in diesem Abschnitt der Ausnehmung nicht mit der entsprechenden Lippe in Kontakt und können so keine Schäden verursachen.

Nach einer weiteren Lehre des Verfahrens wird wenigstens eine Federprofilausnehmung aus einer Federprofilaußenkante herausgefräst, und zwar bevor an der Federprofilaußenkante ein Federprofil herausgefräst wird. Entsprechende Federprofile weisen ein filigranes Federelement auf, das durch die Federprofilausnehmung insoweit geschützt wird, dass dort keine Beschädigung durch eine nachträgliche Bearbeitung erfolgt. An dem Paneel kann also sowohl eine Nutprofilausnehmung als auch eine Federprofilausnehmung herausgefräst werden. Die Nutprofilausnehmung wird an der Nutprofilaußenkante vorgesehen, während die Federprofilausnehmung an der Federprofilaußenkante vorgesehen wird. Bei der Federprofilaußenkante und der Nutprofilaußenkante handelt es sich jeweils vorzugsweise um eine kurze Querkante des Paneels. Zudem sind die entsprechenden Kanten vorzugsweise an gegenüberliegenden Seiten des Paneels angeordnet.

Die Federprofilausnehmung wird bevorzugt angrenzend zu einer weiteren Außenkante herausgefräst, die ebenfalls ein Federprofil aufweisen wird oder schon aufweist. Dies ist davon abhängig, ob die weitere Außenkante vor dem Herausfräsen der Federprofilausnehmung bereits profiliert worden ist. Ecken an denen die Federelement der an benachbarten Außenkanten vorgesehenen Federprofile aneinander stoßen sind sehr fragil und neigen daher zu Brüchen oder Rissen.

Es kommt auch zu Beschädigungen an den Ecken am Rand eines Federelements eines Federprofils, wenn das eigentliche Federprofil aus dem Paneel herausgearbeitet wird. In einem solchen Fall kann die Kontur der Federprofilausnehmung sich im Bereich eines vorderen Endes eines Federelements des Federprofils der Federprofilkante weiter in das Paneel hinein erstrecken als die Kontur des Federprofils der Federprofilaußenkante.

Wenn das Federelement eines Federprofils einen Vorsprung aufweist, dann kann ohne eine entsprechende Ausnehmung im Bereich dieses Vorsprungs leicht eine Beschädigung auftreten. Mithin wird dann vorzugsweise wenigstens eine Federprofilausnehmung mit einer Kontur aus dem Paneel herausgefräst, die sich im Bereich des Vorsprungs des Federelements der Federprofilaußenkante weiter in das Paneel hinein erstreckt als die Kontur des Federprofils der Federprofilaußenkante. Vorzugsweise handelt es sich bei diesem Vorsprung um einen, der sich senkrecht in Richtung zur Rückseite erstreckt.

Darüber hinaus kann das Federelement im Bereich der wenigstens einen Federprofilausnehmung insgesamt dünner aus dem Paneel herausgefräst werden als im Bereich des Federprofils der Federprofilaußenkante. So kommt wenigstens ein Fräswerkzeug zum Herausarbeiten des Federelements des Federprofils nicht in Kontakt mit dem im Bereich der Federprofilausnehmung verbleibenden Federelement. Je nach Ausgestaltung der Federprofilausnehmung gilt dies für die Unterseite und/oder die Oberseite des Federelements.

Zum Herausfräsen der wenigstens einen Ausnehmung wird vorzugsweise ein Fräswerkzeug verwendet, das möglichst wenige Schrägen bezogen auf die Paneelebene aufweist, welche mit dem Paneel bei dessen Bearbeitung in Kontakt kommen, um nur geringe Kraftkomponenten senkrecht zur Paneelebene zuzulassen. Die wenigstens eine Nutprofilausnehmung und/oder Federprofilausnehmung wird daher vorzugsweise senkrecht zur Paneelebene mit einem im Wesentlichen rechteckigen Querschnitt aus dem Paneel herausgefräst.

Insbesondere hinsichtlich der Federprofilausnehmung bietet sich an, wenn diese senkrecht zur Paneelebene mit einem im Wesentlichen gestuften Querschnitt herausgefräst wird. Auf diese Weise kann sich dann die Kontur des Federelements im Bereich der Ausnehmung sowohl an der Spitze als auch an dessen Unterseite weiter in das Paneel hinein erstrecken als die Kontur des Federelements des Federprofils der Federprofilaußenkante.

Verfahrensmäßig kann weiter vorgesehen sein, dass an der einen Außenkante benachbart zu beiden Rändern in Richtung parallel zur einen Außenkante jeweils eine Ausnehmung aus dem Paneel herausgefräst wird. Dies kann auch für eine Nutprofilaußenkante und gleichzeitig für eine Federprofilaußenkante gelten. An der jeweiligen Außenkante werden auf diese Weise ein Einlaufbereich und ein Auslaufbereich für ein bestimmtes Belastungsspitzen ausübendes Fräswerkzeug geschaffen. Diese verringern den Kontakt zwischen Fräswerkzeug und dem Paneel oder sorgen wenigstens dafür, dass nicht so viel Material herausgefräst werden muss, was die Belastungen des Paneels verringert. Besonders bevorzugt ist es, wenn die beiden Ausnehmungen an der einen Außenkante oder der jeweiligen Außenkante mit demselben oder jedenfalls mit einem identischen Fräswerkzeug aus dem Paneel herausgefräst werden.

Um hohe Durchsätze bei der Herstellung der Paneele erzielen zu können, wird das Paneel zum Herausfräsen der wenigstens einen Ausnehmung an einem oszillierenden Fräswerkzeug vorbeigeführt. Die Führung des Paneels und die oszillierende Bewegung des Fräswerkzeugs führen dazu, dass das Fräswerkzeug immer an der richtigen Stelle in das Material des Paneels eindringt und nach Vollendung der entsprechenden Ausnehmung wieder vom Paneel getrennt wird.

Der Begriff Oszillieren bezieht sich hier auf eine periodische Bewegung des Fräswerkzeugs, das in einer einfachen Ausgestaltung des Verfahrens lediglich wiederholt in einer Richtung vor und zurück bewegt werden kann. Alternativ kann es zweckmäßig sein, wenn das Fräswerkzeug im Kreis oder entlang eines Ovals bewegt wird. Bedarfsweise wird das Fräswerkzeug auch entlang einer gekrümmten Bahn hin und her bewegt. In diesem Fall wird dann die Bewegungsrichtung des Fräswerkzeugs immer wieder umgekehrt. Das ist im Falle einer Kreisbahn oder einer Bewegung entlang eines Ovals nicht erforderlich. Alternativ sind aber auch komplexere dreidimensionale, wiederkehrende Bewegungen des Fräswerkzeugs möglich.

Die oszillierende Bewegung kann dabei derart mit dem Vorschub der Paneele abgestimmt sein, dass das Fräswerkzeug bei einem Bewegungszyklus eine Ausnehmung an einem vorderen Paneel am in Bewegungsrichtung des Paneels hinteren Randbereich der einen Außenkante und zudem an einem hinteren Paneel am in Bewegungsrichtung des Paneels vorderen Randbereich der einen Außenkante herausfräst. Hierzu ist es zweckmäßig, die nacheinander zu bearbeitenden Paneele in einem vorbestimmten Abstand an dem die Ausnehmungen herausfräsenden Werkzeug vorbeizuführen.

Das Fräswerkzeug zum Herausfräsen der Ausnehmung kann senkrecht oder aber auch parallel zur Paneelebene bewegt werden, je nachdem welche Bereiche des Paneels durch die Ausnehmung abgetragen werden sollen. Die dabei auf das Paneel ausgeübten Kräfte senkrecht zur Paneelebene sind grundsätzlich geringer, wenn das Fräswerkzeug zum Herausfräsen der Ausnehmung parallel zur Paneelebene bewegt wird, weshalb diese Führung des Fräswerkzeugs grundsätzlich bevorzugt ist.

Nachfolgend wird die Erfindung anhand einer lediglich Ausführungsbeispiele darstellenden Zeichnung näher erläutert. In der Zeichnung zeigt
- Fig. 1: schematisch das Fräsen der Außenkanten des erfindungsgemäßen Paneels nach einem ersten Verfahrensschema,
- Fig. 2: ein Detail einer Vorstufe des erfindungsgemäßen Paneels mit einem Nutprofil an einer bereits bearbeiteten Längskante,
- Fig. 3: ein Detail des Paneels aus Fig. 2 mit einer Ausnehmung und noch nicht profilierter Querkante,
- Fig. 4: schematisch das Herausfräsen eines Teils des Nutprofils der Querkante des Paneels aus Fig. 3 in einer Schnittansicht entlang des Schnitts IV-IV ais Fig. 1,
- Fig. 5: eine Draufsicht auf ein erstes Detail des Paneels aus Fig. 4 nach dem Profilieren der Querkante,
- Fig. 6: eine Seitenansicht des Details des Paneels aus Fig. 5 aus der Richtung VI aus Fig. 5,
- Fig. 7: eine Draufsicht auf ein zweites Detail des Paneels aus Fig. 5,
- Fig. 8: eine Seitenansicht des Details des Paneels aus Fig. 7 aus der Richtung VIII aus Fig. 7,
- Fig. 9: schematisch das Fräsen der Außenkanten des erfindungsgemäßen Paneels nach einem zweiten Verfahrensschema,
- Fig. 10: eine Draufsicht auf ein Detail eines Paneels nach dem zweiten Verfahrensschema hergestellten Paneels nach dem Profilieren der Querkante und
- Fig. 11: eine Seitenansicht des Details des Paneels aus Fig. 10 aus der Richtung XI aus Fig. 10.

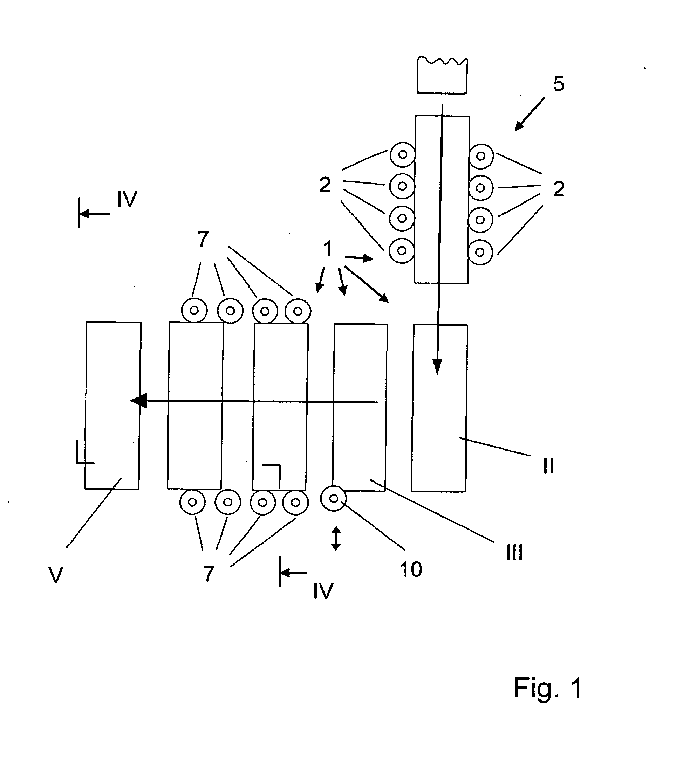

In der Fig. 1 ist schematisch das Herausfräsen der Nutprofile und Federprofile an den Außenkanten eines Paneels 1 dargestellt. Nicht im Einzelnen gezeigt ist, dass die Paneelrohlinge zunächst aus einer großflächigen, beschichteten Platte herausgesägt werden, bevor die Paneelrohlinge der in Fig. 1 dargestellten Profilierung der Außenkanten zugeführt werden. Dabei werden die Paneele 1 in ihrer Längsrichtung hintereinander ausgerichtet und in dieser Richtung an fest stehenden Fräswerkzeugen 2 vorbeigeführt. Jedes dieser Fräswerkzeuge 2 fräst einen Teil der Kontur entweder des Nutprofils 3 oder des Federprofils 4 aus dem Paneel 1 heraus. Aus diesem Grunde sind im dargestellten Ausführungsbeispiel vier Fräswerkzeuge 2 hintereinander angeordnet.
Bei einfachen Profilgeometrien können bereits ein oder zwei Fräswerkzeuge ausreichen, um das gewünschte Profil herauszuarbeiten. Bei komplexeren Profilgeometrien werden umso mehr Fräswerkzeuge benötigt. Beim dargestellten Ausführungsbeispiel handelt es sich bei den Nutprofilen 3 und Federprofilen 4 um miteinander mechanisch verriegelnde Profile. Die mechanische Verriegelung der Profile wirkt dabei einerseits in einer Richtung parallel zu einer Paneelebene der miteinander verbundenen Paneele und andererseits in einer Richtung senkrecht zur Paneelebene der miteinander verbundenen Paneele.

Nachdem die Paneele 1 die erste Station 5 mit Fräswerkzeugen 2 passiert haben, weisen die Längskanten 6 ein durchgängiges Nutprofil 3 und ein durchgängiges Federprofil 4 auf.

Die Fräswerkzeuge 2, 7 weisen im in Fig. 1 dargestellten Ausführungsbeispiel entsprechend profilierte Ränder 8 auf. Die Fräswerkzeuge 2, 7 sind im Wesentlichen rotationssymmetrisch um eine Achse, wobei die Rotationsachse je nach Fräswerkzeug 2, 7 unterschiedlich stark und in unterschiedliche Richtungen gegenüber der Paneelebene des Paneels 1 geneigt sein kann.

In einem nächsten in Fig. 1 dargestellten Arbeitsschritt wird die Transportrichtung der Paneele 1 um 90° gedreht. Die Paneele 1 werden danach in eine Richtung parallel zu den kürzeren Querkanten der Paneele 1 transportiert und dabei mit den Querkanten an einer zweiten Station 8 mit weiteren Fräswerkzeugen 7 vorbeigeführt, die grundsätzlich den Fräswerkzeugen 2 der ersten Station 5 ähnlich sind, da gleiche Nutprofile 3 und Federprofile 4 an den Längskanten 6 und den Querkanten herausgefräst werden sollen.

Die zweite Station weist der Nutprofilaußenkante 9 zugeordnet jedoch ein oszillierendes Fräswerkzeug 10 auf, das dort eine Nutprofilausnehmung 11 aus dem Paneel 1 herausfräst, und zwar bevor die folgenden Fräswerkzeuge 7 das Nutprofil 3 an der Nutprofilaußenkante 9 aus dem Paneel 1 herausfräsen. Weder die Nutzschicht 12 an der Sichtseite des Paneels 1 noch die Rückseite 13 des Paneels 1 wird von der Nutprofilausnehmung 11 erfasst.

Ebenfalls ist nicht im Einzelnen dargestellt, wie der Transport der bearbeiteten Paneele 1 parallel zu den Nutprofilaußenkanten 9 auf die Bewegung des Fräswerkzeugs 10 abgestimmt ist. Das Fräswerkzeug 11 bewegt sich vor und zurück in einer Paneelebene des zu bearbeitenden Paneels 1 und kommt dabei mit einem in Transportrichtung vorderen und hinteren Rand 14, 14' der Nutprofilkante 9 in Kontakt. Dadurch werden aus dem Paneel 1 an der Nutprofilaußenkante 9 zwei Nutprofilausnehmungen 11, 11' an entgegengesetzten Rändern 14, 14' der Nutprofilaußenkante 9 herausgefräst. Alternativ könnte aber auch nur eine der Nutprofilausnehmungen 11, 11' vorgesehen werden.

Die Paneele 1 folgen einander in solch einem geringen Abstand, dass das oszillierende Fräswerkzeug 10 bei einer Vorwärtsbewegung in Richtung auf die zu bearbeitenden Paneele 1 eine Nutprofilausnehmung 11' am hinteren Rand 14' der Nutprofilaußenkante 9 eines früheren Paneels 1 und eine Nutprofilausnehmung 11 aus dem vorderen Rand 14 der Nutprofilaußenkante 9 eines unmittelbar nachfolgenden Paneels 1 herausfräst. Im Ergebnis werden bei jedem Zyklus der oszillierenden Bewegung zwei Nutprofilausnehmungen 11, 11' an aufeinander folgenden Paneelen 1 herausgefräst, wobei die auf diese Weise gefertigten Paneele 1 an beiden Rändern 14, 14' der einen Nutprofilaußenkante 9 Nutprofilausnehmungen 11, 11' aufweisen.

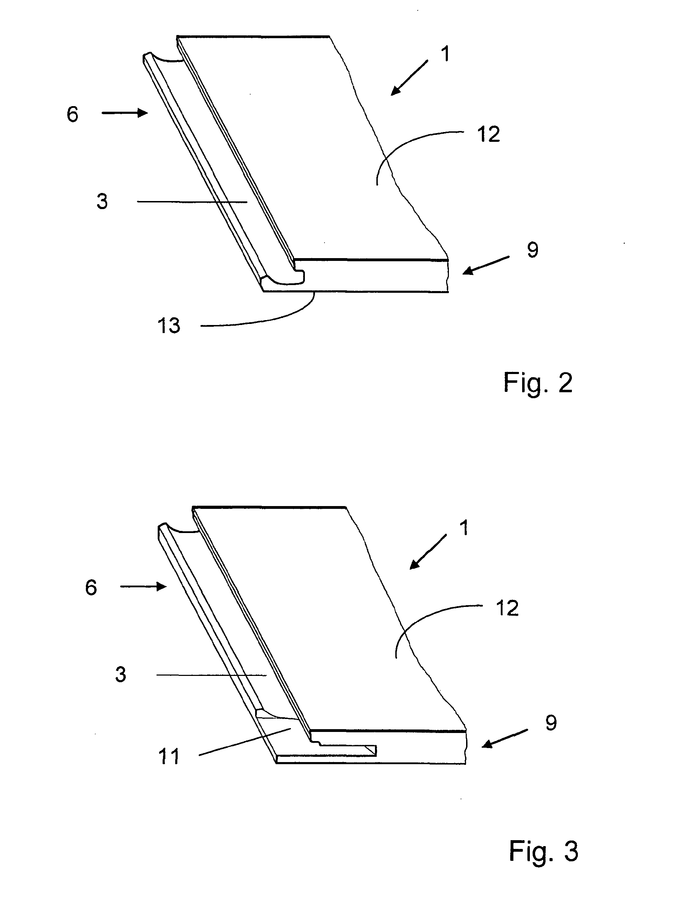

Eine Ecke eines Paneels 1, mit einem Nutprofil 3 an einer Längskante 6 und einer Nutprofilausnehmung 11 an der benachbarten Nutprofilaußenkante 9 ist in der Fig. 3 dargestellt. Man erkennt, dass die Nutprofilausnehmung 11 sich auch in den angrenzenden Randbereich der dargestellten Längskante 6 erstreckt. Zudem reicht die Nutprofilausnehmung 11 senkrecht zur Paneelebene weiter in Richtung der Rückseite 13 des Paneels 1 wie das nachträglich an der Nutprofilaußenkante 9 aus dem Paneel 1 herauszufräsende Nutprofil 3. Bei der Rückseite 13 handelt es sich je nach der beabsichtigten Verwendung zumeist um die Unterseite des Paneels 1.

Bei dem in der Fig. 3 dargestellten Ausführungsbeispiel des Paneels 1 reicht die Nutprofilausnehmung 11 nicht so weit an die Nutzschicht 12 des Paneels 1 heran, wie das nachträglich an der Nutprofilaußenkante 9 vorzusehende Nutprofil 3. Dadurch kann der in der Fig. 3 dargestellte Eckbereich im verlegten Belag stabilisiert werden. Sollte dies nicht ausreichen, um die beim Herausfräsen des Nutprofils 3 an der Nutprofilaußenkante 9 auftretenden Belastungen hinreichend zu reduzieren, kann die Nutprofilausnehmung 11 wenigstens ebenso weit in Richtung der zumeist oberen Nutzschicht 12 des Paneels herausgefräst werden wie das nachträglich an der Nutprofilaußenkante 9 herauszufräsende Nutprofil 3.

Infolge der Nutprofilausnehmung 11 im Einlaufbereich und der das Nutprofil 3 an der Nutprofilaußenkante 9 herausarbeitenden Fräswerkzeuge 7 wird der Materialabtrag dort jedenfalls für einzelne Fräswerkzeuge 7 erheblich reduziert und vorzugsweise sogar ganz auf Null gesenkt. Die entsprechenden Fräswerkzeuge 7 kommen also im Bereich der Nutprofilausnehmung 11 nicht mit dem Paneel 1 in Kontakt und können daher dort auch keine Kraftkomponenten beispielsweise senkrecht zur Paneelebene in das Paneel 1 einleiten. Es kommt also an der Nutprofilaußenkante 9 weder zu Rissen noch zu einem Ausfransen oder Ausreißen der zu fräsenden Nutprofile 3. Damit wird auch die Bildung von losen Partikeln vermieden. Verbleiben diese in den Profilen 1, kann es im Zuge des späteren Verbindens entsprechender Paneele 1 zu Beschädigungen an diesen kommen.

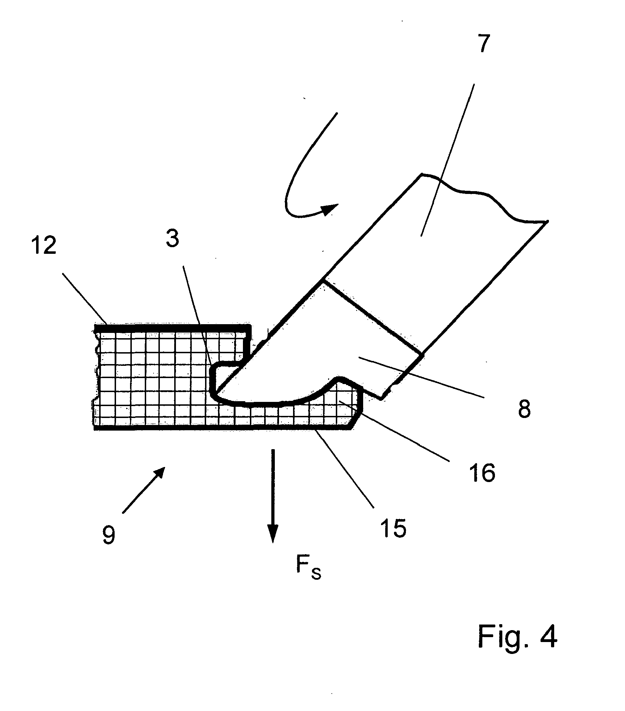

In der Fig. 4 ist beispielhaft ein Fräswerkzeug 7 dargestellt, das zum Herausfräsen des Nutprofils 3 im Bereich einer unteren Lippe 15 eingesetzt werden kann. Bei einem derartigen Fräswerkzeug 7 wie auch bei ähnlich gestalteten Fräswerkzeugen wirken insbesondere bei hohen Vorschubgeschwindigkeiten der Paneele 1 von beispielsweise etwa 250 bis 350 m/min hohe Kraftkomponenten F_{S} senkrecht zur Paneelebene in Richtung der Rückseite 13 des Paneels 1, wodurch es insbesondere im Randbereich der mit einem Nutprofil 3 zu versehenden Nutprofilaußenkanten 9 zu Beschädigungen des Paneels 1 kommen kann, weil es dort wegen der bereits an den Längskanten 6 vorgesehenen Nut-/Feder-Profilen zu Schwächungen der Paneelstruktur kommt.

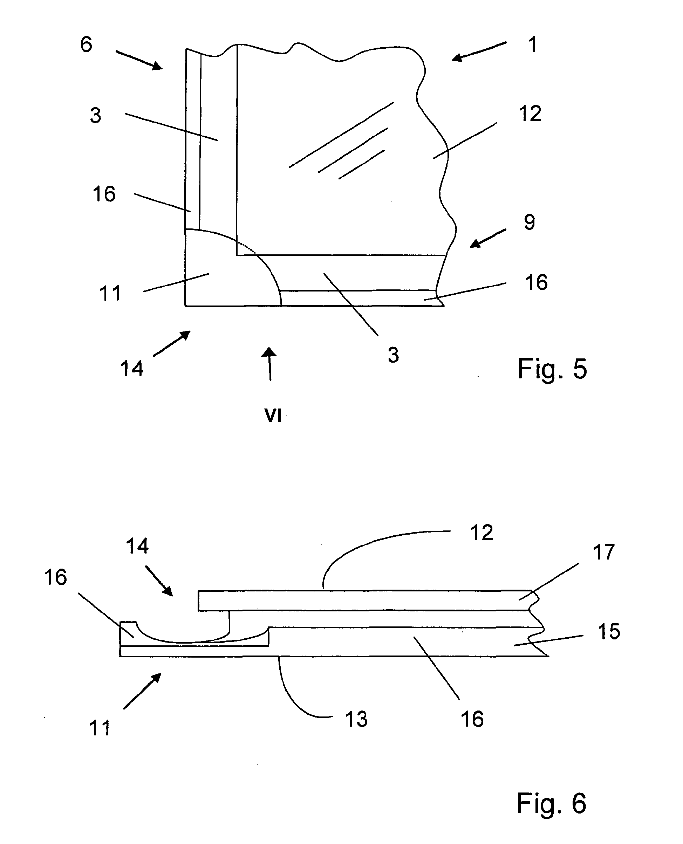

Eine Draufsicht auf eine Ecke eines auf die beschriebene Weise hergestellten Paneels 1 ist in Fig. 5 dargestellt. Man erkennt, dass sich die rückseitigen nach oben weisenden Vorsprünge 16 der an der Nutprofilaußenkante 9 und der Längskante 6 herausgefrästen Nutprofile 3, die dem Verriegeln mit korrespondierenden Federprofilen dienen, nicht bis in den Bereich des Ecks, also der Nutprofilausnehmung 11, erstrecken. Im dargestellten Ausführungsbeispiel reicht die Nutprofilausnehmung 12 bis unter die obere Nutzschicht 12 und damit unter die obere Lippe 17 des Nutprofils 3, jedenfalls im äußersten Eckbereich der Nutzschicht 12.

In Fig. 6 ist das Paneel 1 aus Fig. 5 in einer seitlichen Ansicht gemäß der dort gekennzeichneten Blickrichtung VI dargestellt. Die Nutprofilausnehmung 11 reicht weiter in Richtung der Rückseite 13 des Paneels 1 als dies bei dem eigentlichen Nutprofil 3 der Fall ist, welches an der Längskante 6 und der Nutprofilaußenkante 9 identisch ausgebildet ist. Die Nutprofilausnehmung 11 ist darüber hinaus über die gesamte Erstreckung der Nutprofilausnehmung 11 und insbesondere über die gesamte Länge der unteren Lippe 17 dünner ausgebildet als das Nutprofil 3 der Nutprofilaußenkante 9 jenseits der Nutprofilausnehmung 11.

Aufgrund des in Fig. 1 dargestellten Verfahrens zur Herstellung des Paneels 1 ist die Nutprofilausnehmung 11 bei dem in den Fig. 5 und 6 dargestellten Paneel 1 in der Draufsicht von oben gekrümmt, wobei die Krümmung die Form eines Viertels eines Kreises aufweist oder eher oval geformt sein kann. Zur Herstellung einer entsprechenden Nutprofilausnehmung 11 kann beispielsweise das Paneel 1 zum Herausarbeiten der Nutprofilausnehmung 11 angehalten oder das hierfür vorgesehene Fräswerkzeug 10 mit dem Paneel mitbewegt werden. Letzteres kann beispielsweise dadurch realisiert werden, dass das Fräswerkzeug 10 in einem Kreis oder einem Oval bewegt wird. Alternativ kann das Fräswerkzeug 10 aber auch entlang einer gekrümmten Bahn hin und her oder lediglich geradlinig vor und zurück bewegt werden.

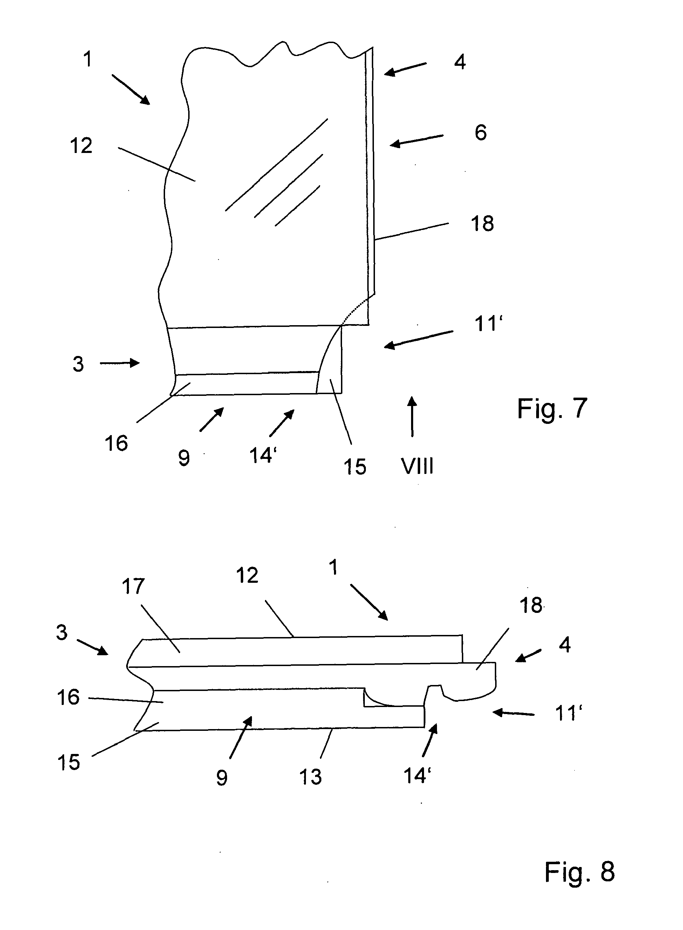

In der Fig. 7 ist eine Draufsicht auf eine Ecke des Paneels mit der weiteren Nutprofilausnehmung 11' der Nutprofilaußenkante 9 dargestellt. Eine Seitenansicht dieser Ecke aus der Richtung VIII aus Fig. 7 ist in der Fig. 8 dargestellt. Benachbart zur Nutprofilaußenkante 9 ist an diesem Rand 14' eine weitere Längskante 6 mit einem Federprofil 4 angeordnet. Auch die in der Fig. 7 dargestellte Nutprofilausnehmung 11' reicht bis unter die Nutzschicht 12 des Paneels 1. Ein wesentlicher Unterschied verglichen mit der Darstellung der Fig. 5 liegt darin, dass das Nutprofil 3 und das Federprofil 4 der benachbarten Längskante 6 des Paneels 1 über das Eck getrennt voneinander sind. Zudem ist der Querschnitt der Nutprofilsausnehmung 11' senkrecht zur Paneelachse so groß, dass das nach dem Profilieren der Längskante 6 zunächst zurückgebliebene Federelement 18 des Federprofils 4 im Bereich der Nutprofilausnehmung 11' vollständig weggefräst worden ist.

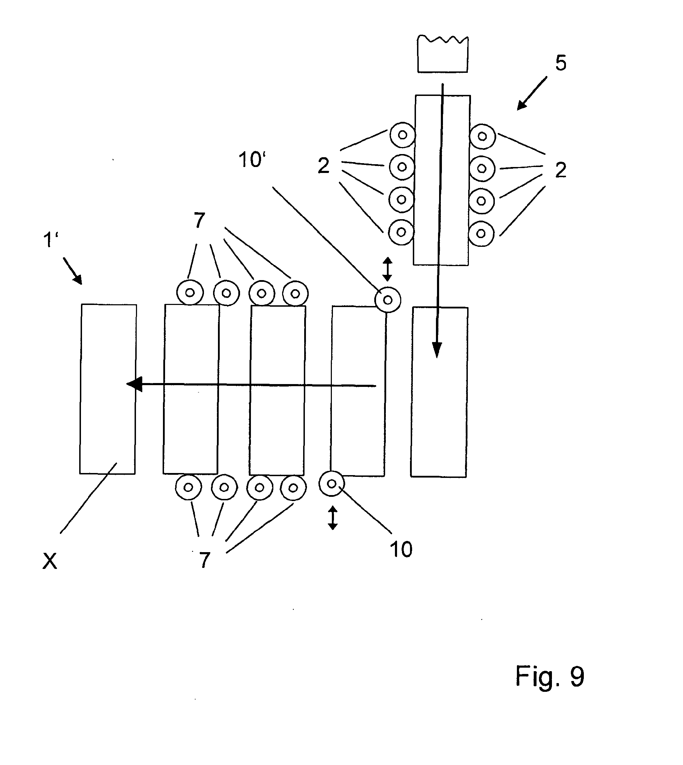

Die Fig. 9 zeigt die Herstellung von Paneelen 1' unter Verwendung einer gegenüber der in der Fig. 1 dargestellten Vorrichtung zur Paneelherstellung nur geringfügig abgewandelten Vorrichtung zur Paneelherstellung. Deshalb wird in Bezug auf die Fig. 9 auch nur auf die Abweichungen gegenüber der Darstellung der Fig. 1 eingegangen. Diese liegen insbesondere darin, dass ein zusätzliches Fräswerkzeug 10' an der dem Fräswerkzeug 10 gegenüber liegenden Federprofilaußenkante 19 angeordnet ist, bei der es sich ebenfalls um eine Querkante des Paneels 1' handelt. Die Funktion und Wirkungsweise zwischen den dargestellten Fräswerkzeugen 10, 10' unterscheidet sich nicht wesentlich. Lediglich die Geometrie der Fräswerkzeuge 10, 10' ist unterschiedlich. Das Fräswerkzeug 10 an der Nutprofilaußenkante 9 hat eine im Wesentlichen rechteckige Kontur mit einem Radius im Wesentlichen parallel zur Paneelebene während das Fräswerkzeug 10' an der Federprofilaußenkante 19 eine gestufte Kontur mit zwei unterschiedlichen Radien ebenfalls im Wesentlichen parallel zur Paneelebene aufweist. Die Fräswerkzeuge 10, 10' sind in Bezug auf das bearbeitete Paneel 1' diagonal gegenüber angeordnet. Dabei ist das zusätzliche Fräswerkzeug 10' zum Herausfräsen einer Federprofilausnehmung 20 an einer Ecke des Paneels vorgesehen, an der benachbart zu der Federprofilaußenkante 19 eine Längskante 6 mit ebenfalls einem Federprofil 4 vorgesehen ist. Dieses Federprofil 4 ist bei der vorangegangenen Profilierung an der Längskante 6 bereits aus dem Paneel 1 herausgefräst worden.

Nicht im Einzelnen dargestellt ist, dass das zusätzliche Fräswerkzeug 10' auf einer Kreisbahn geführt wird, wobei die Paneele in einem entsprechend abgestimmten Abstand an dem zusätzlichen Fräswerkzeug vorbeigeführt werden, dass an der Federprofilaußenkante 19 jeweils zwei Federprofilausnehmungen 20 herausgefräst werden, ähnlich wie dies bereits für die Nutprofilaußenkante 9 beschrieben ist. Auf die zweite Federprofilausnehmung 20 könnte jedoch auch verzichtet oder die Federprofilausnehmung 20 bedarfsweise an dem anderen Rand der Federprofilaußenkante 19 vorgesehen werden.

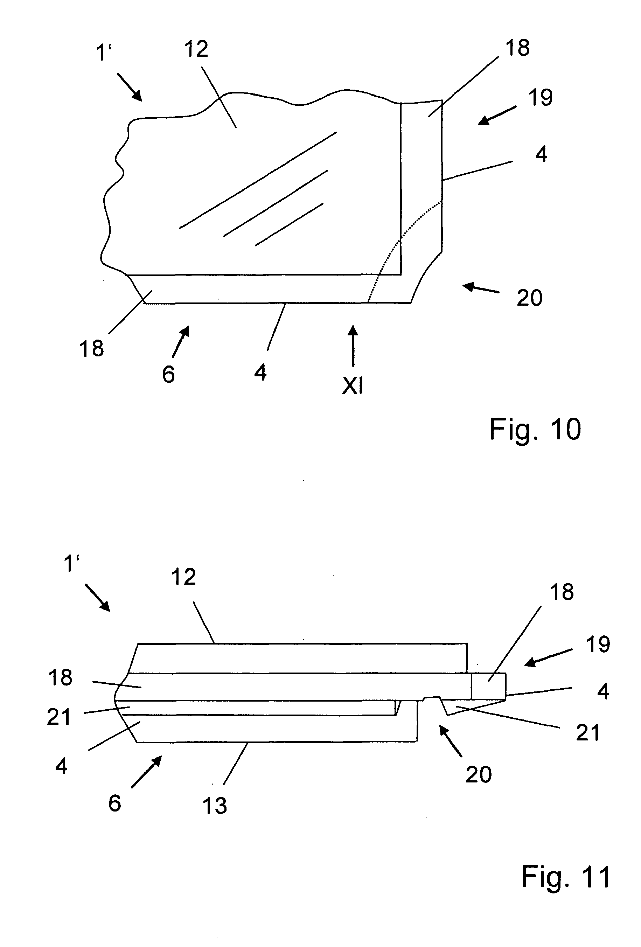

Die auf die beschriebene Weise mit einer Federprofilausnehmung 20 versehene Ecke an einem Rand der Federprofilaußenkante 19 des Paneels 1' ist nach dem Profilieren aller Außenkanten in der Draufsicht in Fig. 10 dargestellt. Die entsprechende Ecke ist in der Fig. 11 aus der Blicksichtung XI in Seitenansicht dargestellt. Beim Herausfräsen der Federprofilausnehmung 20 ist ein Fräswerkzeug 10' mit einer stufenförmigen Kontur verwendet worden. Der Teil der Kontur des Fräswerkzeugs 10' mit einem geringeren Radius sorgt dafür, dass das Federelement 18 des Federprofils 4 der Federprofilaußenkante 19 im Bereich der Federprofilausnehmung 20 abgeschrägt ausläuft. Die beiden Spitzen der benachbarten Federelemente 18 von Federprofilaußenkante und benachbarter Längskante 6 treffen sich folglich nicht. Dort würde es ansonsten leicht zu Beschädigungen des Paneels 1 kommen.
Der Teil der Kontur des Fräswerkzeugs 10' mit einem größeren Radius reicht bis unter die Nutzschicht 12 des Paneels 1'. Dieser Teil des Fräswerkzeugs 10' befindet sich senkrecht zur Paneelebene auf Höhe etwa des nach unten gerichteten Vorsprungs 21 des Federelements 18 des Federprofilaußenkante 19. Demnach ist im Bereich der Federprofilausnehmung 20 das Federelement 18 des Federprofils 4 der Federprofilaußenkante 19 dort, wo das Federelement 18 in die Federprofilausnehmung 20 hinein ragt deutlich dünner ausgebildet als dies im restlichen Bereich des Federprofils 4 an der Federprofilaußenkante 19 der Fall ist.

Je nachdem wie die Bewegungen des zusätzlichen Fräswerkzeugs 18' und der Paneele 1' aufeinander abgestimmt sind, können auch andere Geometrien der Federprofilausnehmung 20 erhalten werden. Eine solche Geometrie könnte mit der Darstellung in den Fig. 10 und 11 übereinstimmen, wobei allerdings die Federprofilaußenkante und die Längskante 6 gerade vertauscht sind. Mit anderen Worten würde sich die Federprofilausnehmung dann weiter in Richtung der Längskante 6 als in Richtung der Federprofilaußenkante 19 erstrecken.

## Patentansprüche

1. Paneel (1) für einen Boden-, Wand- und/oder Deckenbelag,
- mit wenigstens vier Außenkanten,
- wobei wenigstens zwei benachbarte Außenkanten jeweils ein Nutprofil (3) und/oder ein Federprofil (4) aufweisen,
- wobei das Nutprofil (3) und/oder das Federprofil (4) einstückig aus der Trägerplatte des Paneels (1) herausgefräst ist,
- wobei angrenzend zu wenigstens einem Rand (14, 14') einer Außenkante eine Ausnehmung aus dem Paneel (1) herausgefräst ist und
- wobei die Kontur der Ausnehmung wenigstens abschnittsweise derart weiter in das Paneel (1) hineinreicht als die Kontur des Nutprofils (3) und/oder des Federprofils (4) der einen Außenkante, dass in dem Abschnitt der Ausnehmung mehr Material entfernt worden ist, als dies beim Herausfräsen des eigentlichen Nutprofils (3) und/oder Federprofils (4) der Fall ist,
**dadurch gekennzeichnet,**
**dass** die Kontur der Ausnehmung wenigstens abschnittsweise derart weiter in das Paneel (1) hineinreicht als die Kontur des Nutprofils (3) und/oder des Federprofils (4) der einen Außenkante, dass die Kontur der Nut und/oder der Feder wenigstens abschnittsweise innerhalb der Kontur der Ausnehmung verläuft, wenn die Konturen längs zur einen Außenkante aufeinander projiziert werden.

2. Paneel nach Anspruch 1,
**dadurch gekennzeichnet,**
**dass** die eine Außenkante eine Nutprofilaußenkante (9) mit einem Nutprofil (3) und wenigstens einer, vorzugsweise angrenzend zu einer ein Nutprofil (3) aufweisenden weiteren Außenkante vorgesehenen, Nutprofilausnehmung (11, 11') ist.

3. Paneel nach Anspruch 2,
**dadurch gekennzeichnet,**
**dass** die Kontur der wenigstens einen Nutprofilausnehmung (11, 11') im Bereich eines nach oben gerichteten Vorsprungs (16) einer, vorzugsweise im Bereich der wenigstens einen Nutprofilausnehmung (11, 11') insgesamt dünner als im Bereich des Nutprofils (3) der Nutprofilaußenkante (9) ausgeführten, unteren Lippe (15) der Nutprofilaußenkante (9) weiter in das Paneel (1) hineinreicht als die Kontur des Nutprofils (3) der Nutprofilaußenkante (9).

4. Paneel nach einem der Ansprüche 1 bis 3,
**dadurch gekennzeichnet,**
**dass** die eine Außenkante eine Federprofilaußenkante (19) mit einem Federprofil (4) und wenigstens einer, vorzugsweise angrenzend zu einer ein Federprofil (4) aufweisenden weiteren Außenkante vorgesehenen, Federprofilausnehmung (20) ist.

5. Paneel nach Anspruch 4,
**dadurch gekennzeichnet,**
**dass** die Kontur der wenigstens einen Federprofilausnehmung (20) im Bereich des vorderen Endes eines Federelements (18) des Federprofils (4) der Federprofilaußenkante (19) weiter in das Paneel (1) hineinreicht als die Kontur des Federprofils (18) der Federprofilaußenkante (19).

6. Paneel nach Anspruch 4 oder 5,
**dadurch gekennzeichnet,**
**dass** die Kontur der wenigstens einen Federprofilausnehmung (20) im Bereich eines nach unten gerichteten Vorsprungs (21) eines Federelements (18) der Federprofilaußenkante (19) weiter in das Paneel (1) hineinreicht als die Kontur des, vorzugsweise im Bereich der wenigstens einen Federprofilausnehmung (20) insgesamt dünner als im Bereich des Federprofils (18) der Federprofilaußenkante (19) ausgeführten, Federprofils (18) der Federprofilaußenkante (19).

7. Paneel nach einem der Ansprüche 1 bis 6,
**dadurch gekennzeichnet,**
- **dass** die wenigstens eine Nutprofilausnehmung (11, 11') und/oder Federprofilausnehmung (20) senkrecht zur Paneelebene einen im Wesentlichen rechteckigen Querschnitt aufweist oder
- **dass** die wenigstens eine Federprofilausnehmung (20) senkrecht zur Paneelebene einen im Wesentlichen gestuften Querschnitt aufweist.

8. Paneel nach einem der Ansprüche 1 bis 7,
**dadurch gekennzeichnet,**
**dass** angrenzend zu beiden Rändern (14, 14') der einen Außenkante jeweils eine Ausnehmung aus dem Paneel (1) herausgefräst ist.

9. Verfahren zur Herstellung eines Paneels (1) für einen Boden-, Wand- und/oder Deckenbelag, vorzugsweise nach einem der Ansprüche 1 bis 8,
- bei dem an wenigstens vier Außenkanten des Paneels (1) jeweils ein Nutprofil (3) oder Federprofil (4) einstückig aus der Trägerplatte des Paneels (1) herausgefräst wird,
- bei dem vor dem Herausfräsen des Profils an der einen Außenkante angrenzend zu wenigstens einem Rand der einen Außenkante eine Ausnehmung aus dem Paneel (1) herausgefräst wird und
- bei dem die Ausnehmung derart mit einer Kontur, die wenigstens abschnittsweise weiter in das Paneel (1) hineinreicht als die Kontur des Nutprofils (3) und/oder des Federprofils (4) der einen Außenkante, herausgefräst wird, dass in dem Abschnitt der Ausnehmung mehr Material entfernt wird, als dies beim Herausfräsen des eigentlichen Nutprofils (3) und/oder Federprofils (4) der Fall ist, und dass die Kontur der Nut und/oder der Feder wenigstens abschnittsweise innerhalb der Kontur der Ausnehmung verläuft, wenn die Konturen längs zur einen Außenkante aufeinander projiziert werden.

10. Verfahren nach Anspruch 9,
bei dem die wenigstens eine Ausnehmung in einer Richtung parallel zur Paneelebene bis unter eine Nutzschicht des Paneels (1) und/oder an einer kürzeren Querkante des Paneels (1) benachbart zu einer längeren Längskante (6) des Paneels (1) herausgefräst wird.

11. Verfahren nach Anspruch 9 oder 10,
- bei dem die wenigstens eine Ausnehmung als wenigstens eine Nutprofilausnehmung (11, 11') aus einer Nutprofilaußenkante (9), vorzugsweise angrenzend zu einer zuvor oder nachträglich ein Nutprofil (3) aufweisenden weiteren Außenkante, herausgefräst wird und
- bei dem an der Nutprofilaußenkante (9) nach der Nutprofilausnehmung (11, 11') ein Nutprofil (3) herausgefräst wird.

12. Verfahren nach Anspruch 11,
bei dem die wenigstens eine Nutprofilausnehmung (11, 11') mit einer Kontur aus dem Paneel (1) herausgefräst wird, die sich im Bereich eines nach oben gerichteten Vorsprungs (16) einer, vorzugsweise im Bereich der wenigstens einen Nutprofilausnehmung (11, 11') insgesamt dünner als im Bereich des Nutprofils (3) der Nutprofilaußenkante (9) aus der Nutprofilaußenkante (9) herausgefrästen, unteren Lippe (15) der Nutprofilaußenkante (9) weiter in das Paneel (1) hinein erstreckt als die Kontur des Nutprofils (3) der Nutprofilaußenkante (9).

13. Verfahren nach Anspruch 9 oder 10,
- bei dem die wenigstens eine Ausnehmung als wenigstens eine Federprofilausnehmung (20) aus einer Federprofilaußenkante (19), vorzugsweise angrenzend zu einer zuvor oder nachträglich ein Federprofil (3) aufweisenden weiteren Außenkante, herausgefräst wird und
- bei dem an der Federprofilaußenkante (19) nach der Federprofilausnehmung (20) ein Federprofil (3) herausgefräst wird.

14. Verfahren nach Anspruch 13,
bei dem die wenigstens eine Federprofilausnehmung (20) mit einer Kontur aus dem Paneel (1) herausgefräst wird, die sich im Bereich eines vorderen Endes eines Federelements (18) des Federprofils (4) der Federprofilaußenkante (19) weiter in das Paneel (1) hinein erstreckt als die Kontur des Federprofils (4) der Federprofilaußenkante (19).

15. Verfahren nach Anspruch 13 oder 14,
bei dem die wenigstens eine Federprofilausnehmung (20) mit einer Kontur aus dem Paneel (1) herausgefräst wird, die sich im Bereich eines nach unten gerichteten Vorsprungs (21) eines, vorzugsweise im Bereich der wenigstens einen Federprofilausnehmung (20) insgesamt dünner als im Bereich des Federprofils (4) der Federprofilaußenkante (19) aus dem Paneel (1) herausgefrästen, Federelements (18) der Federprofilaußenkante (19) weiter in das Paneel (1) hinein erstreckt als die Kontur des Federprofils (4) der Federprofilaußenkante (19).

16. Verfahren nach einem der Ansprüche 9 bis 15, bei dem angrenzend zu beiden Rändern (14, 14') der einen Außenkante jeweils eine Ausnehmung aus dem Paneel (1) herausgefräst wird.

17. Verfahren nach einem der Ansprüche 9 bis 16,
- bei dem das Paneel (1) zum Herausfräsen der wenigstens einen Ausnehmung an einem, vorzugsweise zum Herausfräsen der wenigstens einen Ausnehmung entlang einer Kreisbahn und/oder senkrecht zur Paneelebene bewegten, oszillierenden Fräswerkzeug (10, 10') vorbeigeführt wird.

## Claims

1. Panel (1) for a floor, wall and/or ceiling covering,
- having at least four outer edges,
- at least two adjacent outer edges each having a groove profile (3) and/or a tongue profile (4),
- the groove profile (3) and/or the tongue profile (4) being integrally milled from the carrier plate of the panel (1),
- a recess being milled from the panel (1) adjacent to at least one edge (14, 14') of an outer edge, and
- the contour of the recess extending at least partially further into the panel (1) than the contour of the groove profile (3) and/or the tongue profile (4) of the one outer edge in such a manner that more material has been removed in the portion of the recess than is the case when the actual groove profile (3) and/or tongue profile (4) is milled, **characterised in that** the contour of the recess extends at least partially further into the panel (1) than the contour of the groove profile (3) and/or the tongue profile (4) of the one outer edge in such a manner that the contour of the groove and/or the tongue extends at least partially inside the contour of the recess when the contours are projected onto each other longitudinally with respect to the one outer edge.

2. Panel according to claim 1, **characterised in that** the one outer edge is a groove profile outer edge (9) having a groove profile (3) and at least one groove profile recess (11, 11') which is preferably provided adjacent to another outer edge which has a groove profile (3).

3. Panel according to claim 2, **characterised in that** the contour of the at least one groove profile recess (11, 11'), in the region of an upwardly directed projection (16) of a lower lip (15) of the groove profile outer edge (9), which lip is preferably generally constructed in the region of the at least one groove profile recess (11, 11') to be thinner than in the region of the groove profile (3) of the groove profile outer edge (9), extends further into the panel (1) than the contour of the groove profile (3) of the groove profile outer edge (9).

4. Panel according to any one of claims 1 to 3, **characterised in that** the one outer edge is a tongue profile outer edge (19) having a tongue profile (4) and at least one tongue profile recess (20) which is preferably provided adjacent to another outer edge which has a tongue profile (4).

5. Panel according to claim 4, **characterised in that** the contour of the at least one tongue profile recess (20) in the region of the front end of a tongue element (18) of the tongue profile (4) of the tongue profile outer edge (19) extends further into the panel (1) than the contour of the tongue profile (18) of the tongue profile outer edge (19).

6. Panel according to claim 4 or 5, **characterised in that** the contour of the at least one tongue profile recess (20) in the region of a downwardly directed projection (21) of a tongue element (18) of the tongue profile outer edge (19) extends further into the panel (1) than the contour of the tongue profile (18) of the tongue profile outer edge (19), which tongue profile is preferably generally constructed in the region of the at least one tongue profile recess (20) to be thinner than in the region of the tongue profile (18) of the tongue profile outer edge (19).

7. Panel according to any one of claims 1 to 6, **characterised in that**
- the at least one groove profile recess (11, 11') and/or the tongue profile recess (20) has/have a substantially rectangular cross-section perpendicularly relative to the panel plane or
- **in that** the at least one tongue profile recess (20) has a substantially stepped cross-section perpendicularly relative to the panel plane.

8. Panel according to any one of claims 1 to 7, **characterised in that** a recess is milled from the panel (1) adjacent to both edges (14, 14') of the one outer edge.

9. Method for producing a panel (1) for a floor, wall and/or ceiling covering, preferably according to any one of claims 1 to 8,
- wherein, at least at four outer edges of the panel (1), a groove profile (3) or a tongue profile (4) is integrally milled from the carrier plate of the panel (1),
- wherein a recess is milled from the panel (1) adjacent to at least one edge of the one outer edge before the profile is milled at the one outer edge and
- wherein the recess is milled with a contour which extends at least partially further into the panel (1) than the contour of the groove profile (3) and/or the tongue profile (4) of the one outer edge in such a manner that, in the portion of the recess, more material is removed than is the case when the actual groove profile (3) and/or tongue profile (4) is milled, and that the contour of the groove and/or the tongue extends at least partially inside the contour of the recess when the contours are projected onto each other longitudinally with respect to an outer edge.

10. Method according to claim 9, wherein the at least one recess is milled in a direction parallel with the panel plane as far as a location below a useful layer of the panel (1) and/or at a shorter transverse edge of the panel (1) adjacent to a longer longitudinal edge (6) of the panel (1).

11. Method according to claim 9 or 10,
- wherein the at least one recess is milled as at least one groove profile recess (11, 11') from a groove profile outer edge (9), preferably adjacent to an additional outer edge which has a groove profile (3) before or afterwards, and
- wherein a groove profile (3) is milled at the groove profile outer edge (9) after the groove profile recess (11, 11').

12. Method according to claim 11, wherein the at least one groove profile recess (11, 11') is milled from the panel (1) with a contour which, in the region of an upwardly directed projection (16) of a lower lip (15) of the groove profile outer edge (9), which lip is preferably milled from the groove profile outer edge (9) to be generally thinner in the region of the at least one groove profile recess (11, 11') than in the region of the groove profile (3) of the groove profile outer edge (9), extends further into the panel (1) than the contour of the groove profile of the groove profile outer edge (9).

13. Method according to claim 9 or claim 10,
- wherein the at least one recess is milled as at least one tongue profile recess (20) from a tongue profile outer edge (19), preferably adjacent to another outer edge which has a tongue profile (3) before or afterwards, and
- wherein a tongue profile (3) is milled at the tongue profile outer edge (19) after the tongue profile recess (20).

14. Method according to claim 13, wherein the at least one tongue profile recess (20) is milled from the panel (1) with a contour which, in the region of a front end of a tongue element (18) of the tongue profile (4) of the tongue profile outer edge (19), extends further into the panel (1) than the contour of the tongue profile (4) of the tongue profile outer edge (19).

15. Method according to claim 13 or claim 14, wherein the at least one tongue profile recess (20) is milled from the panel (1) with a contour which, in the region of a downwardly directed projection (21) of a tongue element (18) of the tongue profile outer edge (19), which tongue element is preferably milled from the panel (1) to be generally thinner in the region of the at least one tongue profile recess (20) than in the region of the tongue profile (4) of the tongue profile outer edge (19), extends further into the panel (1) than the contour of the tongue profile (4) of the tongue profile outer edge (19).

16. Method according to any one of claims 9 to 15, wherein a recess is milled from the panel (1) in each case adjacent to both edges (14, 14') of the one outer edge.

17. Method according to any one of claims 9 to 16,
- wherein the panel (1), in order to mill the at least one recess, is moved past an oscillating milling tool (10, 10') which is preferably moved along a circular path and/or perpendicularly relative to the panel plane in order to mill the at least one recess.

## Revendications

1. Panneau (1) pour un revêtement de sol, de mur et/ou de plafond,
- avec au moins quatre bords extérieurs,
- dans lequel au moins deux bords extérieurs adjacents comportent respectivement un profil de rainure (3) et/ou un profil de ressort (4),
- dans lequel le profil de rainure (3) et/ou le profil de ressort (4) est fraisé d'une seule pièce à partir de la plaque de support du panneau (1),
- dans lequel un évidement est fraisé dans le panneau (1) à côté d'au moins une bordure (14, 14') d'un bord extérieur, et
- dans lequel le contour de l'évidement s'étend au moins partiellement plus loin dans le panneau (1) que le contour du profil de rainure (3) et/ou du profil de ressort (4) de l'un des bords extérieurs, de telle sorte que dans la partie de l'évidement, une plus grande quantité de matériau est enlevée que lors du fraisage du profil de rainure (3) et/ou du profil de ressort (4) effectif,
**caractérisé en ce que**
le contour de l'évidement s'étend au moins partiellement plus loin dans le panneau (1) que le contour du profil de rainure (3) et/ou du profil de ressort (4) de l'un des bords extérieurs, de telle sorte que le contour de la rainure et/ou du ressort s'étend au moins partiellement à l'intérieur du contour de l'évidement, lorsque les contours sont projetés l'un sur l'autre dans la parallèlement à un bord extérieur.

2. Panneau selon la revendication 1,
**caractérisé en ce que**
un bord extérieur est un bord extérieur de profil de rainure (9) avec un profil de rainure (3) et au moins un évidement de profil de rainure (11,11') prévu de préférence à côté d'un autre bord extérieur comportant un profil de rainure (3).

3. Panneau selon la revendication 2,
**caractérisé en ce que**
le contour de l'au moins un évidement de profil de rainure (11, 11') s'étend plus loin dans le panneau (1) que le contour du profil de rainure (3) du bord extérieur de profil de rainure (9), dans la région d'une saillie (16) orientée vers le haut, appartenant à une lèvre inférieure (15) du bord extérieur de profil de rainure (9) conçue de préférence globalement plus fine dans la région de l'au moins un évidement de profil de rainure (11,11') que dans la région du profil de rainure (3) du bord extérieur de profil de rainure (9).

4. Panneau selon l'une des revendications 1 à 3,
**caractérisé en ce que**
un bord extérieur est un bord extérieur de profil de ressort (19) avec un profil de ressort (4) et au moins un évidement de profil de ressort (20) prévu de préférence à côté d'un autre bord extérieur comportant un profil de ressort (4).

5. Panneau selon la revendication 4,
**caractérisé en ce que**
le contour de l'au moins un évidement de profil de ressort (20) s'étend plus loin dans le panneau (1) que le contour du profil de ressort (18) du bord extérieur de profil de ressort (19), dans la région de l'extrémité avant d'un élément de ressort (18) du profil de ressort (4) du bord extérieur de profil de ressort (19).

6. Panneau selon la revendication 4 ou 5,
**caractérisé en ce que**
dans la région d'une saillie (21) d'un élément de ressort (18) du bord extérieur de profil de ressort (19) orientée vers le bas, le contour de l'au moins un évidement de profil de ressort (20) s'étend plus loin dans le panneau (1) que le contour du profil de ressort (18) du bord extérieur de profil de ressort (19), conçu de préférence globalement plus fin dans la région de l'au moins un évidement de profil de ressort (20) que dans la région du profil de ressort (18) du bord extérieur de profil de ressort (19).

7. Panneau selon l'une des revendications 1 à 6,
**caractérisé en ce que**
- l'au moins un évidement de profil de rainure (11, 11') et/ou l'évidement de profil de ressort (20) présente une section transversale essentiellement rectangulaire perpendiculairement au plan du panneau, ou
- l'au moins un évidement de profil de ressort (20) présente une section transversale essentiellement étagée perpendiculairement au plan du panneau.

8. Panneau selon l'une des revendications 1 à 7,
**caractérisé en ce que**
un évidement est fraisé dans le panneau (1) respectivement à côté des deux bordures (14, 14') de l'un des bords extérieurs.

9. Procédé pour la fabrication d'un panneau (1) pour un revêtement de sol, de mur et/ou de plafond, de préférence selon l'une des revendications 1 à 8,
- dans lequel un profil de rainure (3) ou un profil de ressort (4) est fraisé d'une seule pièce dans la plaque de support du panneau (1), sur au moins quatre bords extérieurs du panneau (1),
- dans lequel un évidement est fraisé dans le panneau (1) avant le fraisage du profil sur l'un des bords extérieurs, à côté d'au moins une bordure du bord extérieur,
- dans lequel l'évidement est fraisé de telle façon avec un contour s'étendant au moins partiellement plus loin dans le panneau (1) que le contour du profil de rainure (3) et/ou du profil de ressort (4), que dans la partie de l'évidement, une plus grande quantité de matériau est enlevée que lors du fraisage du profil de rainure (3) et/ou du profil de ressort (4) effectif, et en ce que le contour de la rainure et/ou du ressort s'étend au moins partiellement à l'intérieur du contour de l'évidement, lorsque les contours sont projetés l'un sur l'autre parallèlement à un bord extérieur.

10. Procédé selon la revendication 9,
dans lequel, dans une direction parallèle au plan du panneau, l'au moins un évidement est fraisé jusque sous une couche de rainure du panneau (1) et/ou sur un bord transversal plus court du panneau (1), à côté d'un bord longitudinal plus long (6) du panneau (1).

11. Procédé selon la revendication 9 ou 10,
- dans lequel l'au moins un évidement est fraisé comme au moins un évidement de profil de rainure (11, 11') dans un bord extérieur de profil de rainure (9), de préférence à côté d'un autre bord extérieur comportant un profil de rainure (3) avant ou après, et
- dans lequel un profil de rainure (3) est fraisé dans le bord extérieur de profil de rainure (9), après l'évidement de profil de rainure (11, 11').

12. Procédé selon la revendication 11,
dans lequel l'au moins un évidement de profil de rainure (11,11') est fraisé dans le panneau (1) avec un contour s'étendant plus loin dans le panneau (1) que le contour du profil de rainure (3) du bord extérieur de profil de rainure (9), dans la région d'une saillie (16) orientée vers le haut, appartenant à une lèvre inférieure (15) du bord extérieur de profil de rainure (9) fraisée dans le bord extérieur de profil de rainure (9) et conçue de préférence globalement plus fine dans la région de l'au moins un évidement de profil de rainure (11, 11') que dans la région du profil de rainure (3) du bord extérieur de profil de rainure (9).

13. Procédé selon la revendication 9 ou 10,
- dans lequel l'au moins un évidement est fraisé comme au moins un évidement de profil de ressort (20) dans un bord extérieur de profil de ressort (19), de préférence à côté d'un autre bord extérieur comportant un profil de ressort (3) avant ou après, et
- dans lequel un profil de ressort (3) est fraisé dans le bord extérieur de profil de ressort (19), après l'évidement de profil de ressort (20).

14. Procédé selon la revendication 13,
dans lequel l'au moins un évidement de profil de ressort (20) est fraisé dans le panneau (1) avec un contour s'étendant plus loin dans le panneau (1) que le contour du profil de ressort (4) du bord extérieur de profil de ressort (19), dans la région d'une extrémité avant d'un élément de ressort (18) du profil de ressort (4) du bord extérieur de profil de ressort (19).

15. Procédé selon la revendication 13 ou 14,
dans lequel l'au moins un évidement de profil de ressort (20) est fraisé dans le panneau (1) avec un contour qui, dans la région d'une saillie (21) orientée vers le bas d'un élément de ressort (18) du bord extérieur de profil de ressort (19) fraisé dans le panneau (1) et conçu de préférence globalement plus fin dans la région de l'au moins un évidement de profil de ressort (20) que dans la région du profil de ressort (4) du bord extérieur de profil de ressort (19), s'étend plus loin dans le panneau (1) que le contour du profil de ressort (4) du bord extérieur de profil de ressort (19).

16. Procédé selon l'une des revendications 9 à 15,
dans lequel un évidement est fraisé dans le panneau (1) respectivement à côté des deux bordures (14, 14') de l'un des bords extérieur.

17. Procédé selon l'une des revendications 9 à 16,
- dans lequel, pour le fraisage de l'au moins un évidement, le panneau (1) passe devant un outil de fraisage (10, 10') oscillant déplacé le long d'un circuit et/ou perpendiculairement au plan du panneau de préférence pour le fraisage de l'au moins un évidement.
